Europäisches Patentamt

European Patent Office

Office européen des brevets

(19)

(11) Numéro de publication: **0 467 294 A1**

## (12) DEMANDE DE BREVET EUROPEEN

(21) Numéro de dépôt: 91111853.7

(51) Int. Cl.⁵: **G02B 6/44**

(22) Date de dépôt: **16.07.91**

(30) Priorité: **19.07.90 FR 9009252**
**19.07.90 FR 9009251**

(43) Date de publication de la demande:
**22.01.92 Bulletin 92/04**

(84) Etats contractants désignés:
**DE DK ES FR GB GR IT**

(71) Demandeur: **ALCATEL CABLE**
**30, rue des Chasses**
**F-92111 Clichy Cédex(FR)**

(72) Inventeur: **Marlier, Géry**
**60, rue Verte**
**F-62100 Calais(FR)**
Inventeur: **Libert, Jean-François**
**13, rue de Verdun, Condette**
**F-62360 Pont des Briques St Etienne(FR)**

(74) Mandataire: **Weinmiller, Jürgen et al**
**Lennéstrasse 9 Postfach 24**
**W-8133 Feldafing(DE)**

(54) **CABLE SOUS-MARIN DE TELECOMMUNICATIONS à FIBRES OPTIQUES.**

(57) Le câble sous-marin est à fibres optiques noyées dans un matériau de remplissage du tube, lui-même intérieur à un toron de fils métalliques à haute résistance mécanique, les interstices entre les fils du toron étant remplis d'un matériau d'étanchéité.

Il est caractérisé en ce que le toron est entouré d'une gaine extrudée (8) en matériau isolant électrique et résistant à l'abrasion, avec pour, la téléalimentation d'équipements interposés sur le câble, des moyens conducteurs (7) appartenant au toron ou l'entourant, ces moyens étant entourés par ladite gaine (8).

Application : Télécommunication

FIG. 1

La présente invention concerne un câble sousmarin de télécommunications à fibres optiques, comprenant un tube contenant les fibres optiques noyées dans un matériau de remplissage, à l'intérieur d'un toron de fils métalliques à haute résistance mécanique.

On a déjà proposé dans le document AU-A-81304/87 un câble sous-marin de télécommunications comportant un tube en métal conducteur entourant des fibres optiques noyées dans un matériau remplissant l'intérieur du tube, un isolant électrique entourant le tube en métal conducteur, et au moins une couche de fils métalliques à résistance élevée à la traction entourant l'isolant, formant armure de protection. Un tel câble ne procure cependant pas une résistance suffisante aux possibilités d'infiltration et de propagation longitudinale d'eau, notamment en cas d'endommagement du câble immergé. En outre, les fils métalliques formant armure de protection peuvent être corrodés au contact de l'eau de mer par action bactérienne par exemple, ce phénomène de corrosion pourrait alors donner naissance à de l'hydrogène moléculaire pouvant dans certaines conditions migrer jusqu'au contact avec les fibres optiques occasionnant une dégradation des caractéristiques de transmission. En outre, le tube en métal conducteur contenant les fibres optiques rend la structure du câble coûteuse pour une liaison non téléalimentée, ou impose un module optique défini par le tube contenant les fibres qui soit différent selon que la liaison est ou non téléalimentée.

On connaît également, par le document EP-A-0 371 660, un câble sous-marin de télécommunications à fibres optiques sous tube de résistance, avec ce tube non affecté à la transmission d'énergie, pour permettre de conserver inchangée la partie centrale du câble, que celui-ci assure ou non la téléalimentation d'équipements répéteurs ou régénérateurs de la liaison définie. Ce câble comporte un diélectrique recouvrant le tube, une armure de résistance sur le diélectrique et une gaine externe de protection. Ce câble est le cas échéant muni d'une couche conductrice interne de téléalimentation, constituée par une couche de fils conducteurs, en cuivre ou en aluminium, interposée dans le diélectrique. Le diélectrique est alors réalisé en deux couches, et les conducteurs de téléalimentation en sandwich entre ces deux couches de diélectrique.

La présente invention a pour but de répondre à ce même but, avec une structure plus compacte et de réalisation simplifiée et de plus faible coût qui permet en outre de minimiser ou d'éliminer des concentrations de champ électrique qui risquent de la dégrader.

Le câble selon l'invention, comportant un tube de tenue mécanique du câble et de protection des fibres optiques contenant les fibres optiques noyées dans un matériau de remplissage, un toron de fils métalliques à haute résistance mécanique, autour du tube, conférant avec ledit tube les caractéristiques mécaniques à la pression et à la traction dudit câble, un matériau d'étanchéité dans les interstices entre les fils à haute résistance mécanique du toron, s'opposant à une propagation d'eau dans le câble, une gaine externe extrudée en matériau résistant à l'abrasion entourant ledit toron, et des moyens conducteurs internes affectés à la téléalimentation d'équipements interposés sur le câble, est caractérisé en ce que lesdits moyens conducteurs sont disposés sur la périphérie dudit toron et entourés par ladite gaine externe extrudée et sont de section adaptée à la nature desdits équipements, ladite gaine externe étant en outre isolante électriquement.

Il répond en outre de préférence à au moins l'une des caractéristiques suivantes :
- lesdits moyens conducteurs de téléalimentation sont constitués par une bande conductrice sur le toron ou des fils conducteurs appartenant avec lesdits fils métalliques à haute résistance au toron,
- il comporte une couche semiconductrice d'interface, entre les moyens de téléalimentation et ladite gaine externe, en matériau isolant chargé de particules conductrices,
- le matériau d'étanchéité est lui-même chargé de particules conductrices.

Les caractéristiques et avantages de la présente invention ressortiront de la description donnée ci-après d'exemples préférés de réalisation illustrés dans les dessins. Dans ces dessins :
- La figure 1 représente en coupe un câble selon l'invention,
- La figure 2 représente en coupe une variante de réalisation du câble selon l'invention,
- la figure 3 représente en coupe une autre variante de réalisation du câble selon l'invention.

Dans ces figures, les mêmes références sont utilisées pour désigner les mêmes éléments.

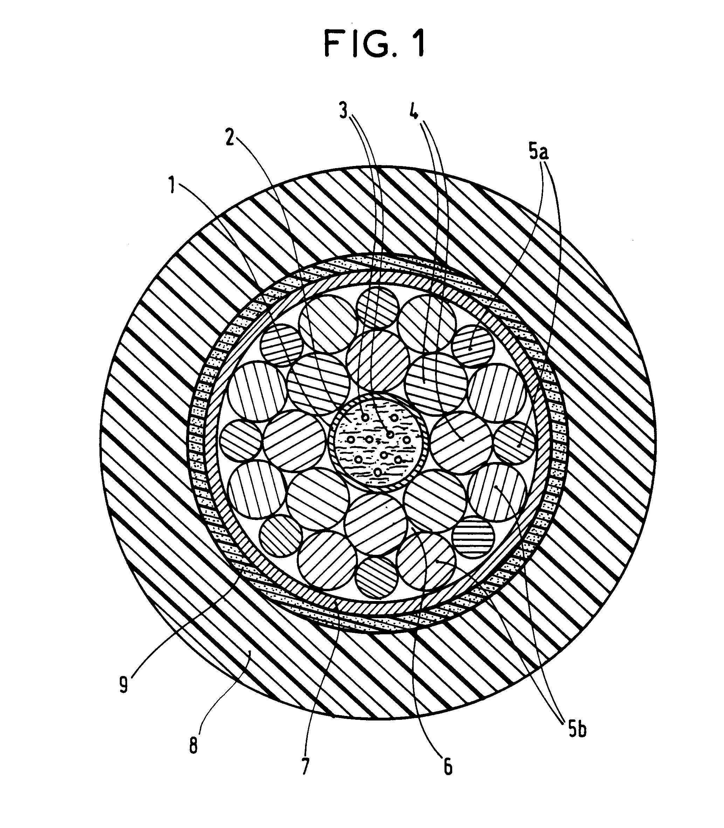

Le câble représenté dans la figure 1, comporte un tube 1 rempli d'un compound d'étanchéité par exemple un gel de silice 2 dans lequel sont noyées des fibres optiques 3. Les fibres optiques peuvent être câblées ou non et être en surlongueur ou non dans le tube.

Le tube 1 est métallique et résistant à la pression de l'eau, par exemple en acier. Il est soudé longitudinalement par laser ou à l'arc sous gaz inerte ou à l'arc plasma ou toute autre méthode convenable. Ce tube 1 peut également être en matière plastique extrudée avec dans ce cas des moyens associés précisés ci-après conférant au câble une résistance suffisante à la pression.

Le tube 1 est entouré d'un toron de fils métalliques 4 et 5a, 5b de haute résistance à la traction, en une ou de préférence plusieurs couches, de même sens ou de sens opposés. Avec un tube 1 en matière plastique, ce toron présente en outre les caractéristiques de voûte assurant la résistance à la pression. Ces fils 4 et 5a notamment sont de préférence en acier.

Les interstices 6 entre les fils 4 et 5 et entre le toron et le tube 1, sont remplis d'un matériau d'étanchéité, non représenté pour éviter des surcharges, s'opposant à la propagation longitudinale de l'eau dans le câble, en particulier lors d'un endommagement accidentel du câble immergé. Ce matériau d'étanchéité est par exemple une résine polyuréthane ou d'un autre matériau pouvant assurer ce rôle d'étanchéité.

Le câble de la figure 1 comporte, en outre, une bande conductrice 7, en cuivre ou aluminium ou autre métal ou alliage très bon conducteur électrique, autour du toron de fils à haute résistance mécanique. Cette bande conductrice 7 est affectée à la téléalimentation de répéteurs amplificateurs ou régénérateurs interposés entre tronçons de câbles d'une liaison sous-marine. Elle ramène à une valeur convenable la résistance électrique en général trop élevée du toron de fils d'acier et du tube acier. La bande conductrice 7 est soudée longitudinalement pour former un tube et rétreinte sur le toron ou est définie par un ou plusieurs rubans enroulés hélicoïdalement ou un ou plusieurs feuillards posés en long sur le toron et assemblés entre eux.

Une gaine 8, en polyéthylène ou autre matériau isolant électrique et résistant à l'abrasion, est extrudée en une ou plusieurs couches sur le toron recouvert de la bande conductrice 7. Son épaisseur est fonction du degré d'isolation électrique et de la protection mécanique désirés.

Avantageusement, comme illustré, une couche semiconductrice d'interface 9 est interposée entre cette gaine 8 et la bande conductrice 7, en particulier lorsque cette dernière est rubannée ou autre et n'est pas parfaitement lisse. Elle est très faiblement conductrice. Elle forme barrière de potentiel, permet une répartition uniforme des charges électriques dans la bande 7 et permet une réduction de l'épaisseur de la gaine 8 pour une même isolation, en évitant des concentrations de champs électriques intenses sur les aspérités, qui pourraient alors endommager la gaine 8. Cette couche semiconductrice est en polyéthylène chargé de particules conductrices, par exemple de carbone. Un agent d'accrochage, par exemple un copolymère, assure le cas échéant son adhérence sur la bande conductrice 7.

En outre, le matériau d'étanchéité peut lui-même être chargé de particules conductrices et/ou une autre couche semiconductrice non représentée, analogue à la couche 9, peut être utilisée pour recouvrir les interstices extérieurs entre les fils du toron, avec un agent d'accrochage assurant son adhérence sur les fils périphériques 5 du toron et la bande conductrice 7, pour éviter tout problème électrique à l'interface bande conductrice/toron.

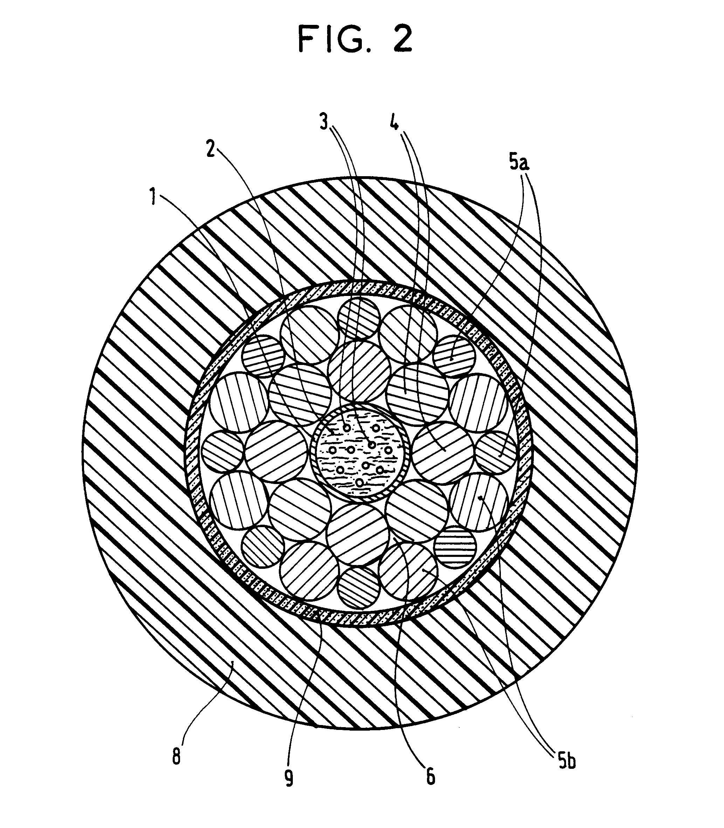

Le câble illustré dans la figure 2 est une variante du câble précédent. Seules ses différences par rapport au câble de la figure 1 sont précisées ci-après.

Le câble selon la figure 2 ne comporte pas la bande conductrice 7 du câble de la figure 1. Il a sa couche semiconductrice 9 directement contre le toron de fils et adhérant aux fils périphériques. En outre son toron est à fils 4, 5a et 5b, de préférence en plusieurs couches, qui pour certains ne sont plus des fils de haute résistance mécanique mais des fils conducteurs. De préférence il est à fils d'acier 4 en une ou plusieurs couches contre le tube 1 et présentant les caractéristiques de voûte lorsque le tube 1 est en plastique, et à fils 5a et 5b de la couche extérieure les uns en acier et les autres en aluminium ou en cuivre. Ces derniers fils 5a et 5b sont montrés de section différente et alternés. Les fils conducteurs 5a ou 5b sont ceux de diamètre donnant la résistance ohmique convenable pour l'alimentation de répéteurs ou de régénérateurs. Ils jouent le rôle de la bande précitée 7.

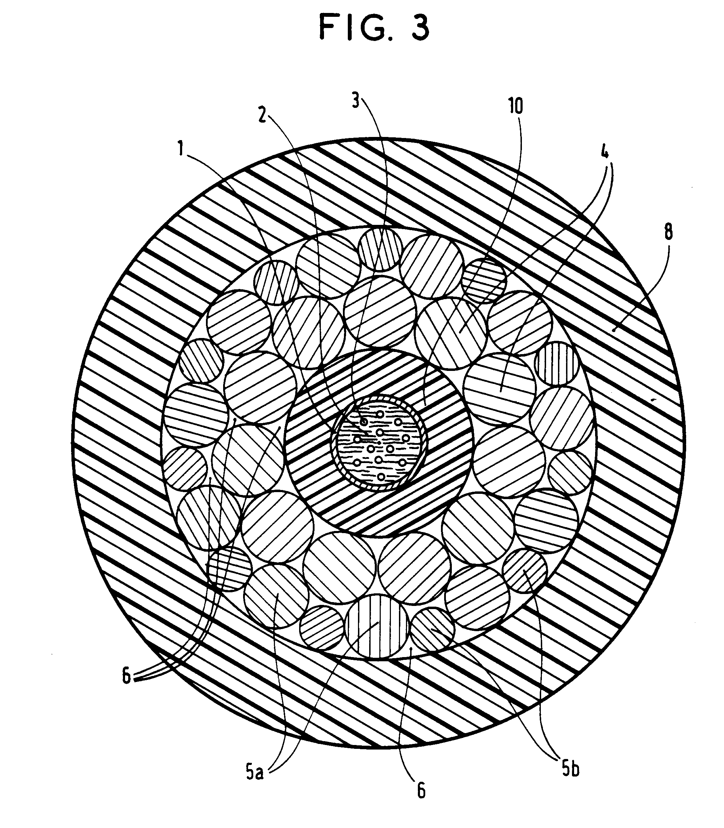

Le câble illustré dans la figure 3 est une variante des câbles précédents. Il a sa couche de matériau d'étanchéité remplissant les interstices 6 entre les fils du toron, et en particulier les interstices extérieurs entre les fils 5a et 5b, chargé de particules conductrices et éventuellement d'un agent d'accrochage, sur laquelle adhère directement la gaine extérieure 8. Cette couche externe de matériau d'étanchéité joue directement le rôle de la couche 9 précitée.

Le câble selon cette figure 3 comporte en outre une gaine interne 10, interposée entre le tube 1 et l'armure de fils 4 et 5. Elle donne au câble un diamètre plus grand et permet d'améliorer sa tenue mécanique, lors de l'utilisation du câble en grande profondeur.

Les câbles avec ou sans téléalimentation ont le même module central défini par le tube 1 contenant les fibres sur lequel sont rapportés les éléments extérieurs convenables. Sans téléalimentation, le câble a son toron de fils tous en acier qui est rempli de matériau d'étanchéité, et est sans bande conductrice et/ou couche semiconductrice. Avec téléalimentation, le câble a son toron de fils tous en acier rempli de matériau d'étanchéité et recevant la bande conductrice sur laquelle est de préférence formée la couche semiconductrice d'interface avec la gaine et éventuellement celle d'interface avec le toron, ou a son toron de fils d'acier et de fils conducteurs rempli de matériau d'étanchéité et recevant de préférence la couche semiconductrice d'interface avec la gaine. Le coût de fabrication de ces deux types de câble, pour une liaison téléalimentée ou non, s'en trouve réduit. Leur structure est compacte et plus légère, avec une bonne tenue à la pression.

En regard des différents câbles décrits ci-avant, il apparaît que l'existence, la nature et les sections des moyens conducteurs peuvent être modifiées selon les besoins en téléalimentation du système, sans avoir à intervenir sur les autres parties constitutives du câble. La section de ces moyens conducteurs peut en particulier être nulle dans les systèmes sans répéteurs, réduite dans les systèmes avec amplificateurs optiques, ou normale dans les systèmes avec régénérateurs. La résistance du câble à l'hydrogène, à la pression, n'en n'est pas pour autant affectée.

**Revendications**

1. Câble sous-marin de télécommunication à fibres optiques, comportant un tube (1) de tenue mécanique du câble et de protection des fibres optiques, contenant les fibres optiques (3) noyées dans un matériau de remplissage, un toron de fils métalliques à haute résistance mécanique (4, 5) autour du tube (1), conférant avec ledit tube les caractéristiques mécaniques à la pression et à la traction dudit câble, un matériau d'étanchéité dans les interstices (6) entre les fils à haute résistance mécanique du toron, s'opposant à une propagation d'eau dans le câble, une gaine externe extrudée (8) en matériau résistant à l'abrasion entourant ledit toron, et des moyens conducteurs internes affectés à la téléalimentation d'équipements interposés sur le câble, caractérisé en ce que lesdits moyens conducteurs (7, 5a ou 5b) sont disposés sur la périphérie dudit toron et entourés par ladite gaine externe extrudée (8) et sont de section adaptée à la nature desdits équipements, ladite gaine externe étant en outre isolante électriquement.

2. Câble selon la revendication 1, caractérisé en ce que lesdits moyens conducteurs affectés à la téléalimentation comportent une bande conductrice (7), soudée longitudinalement et rétreinte sur le toron ou rubanée en hélice ou posée en long sur ledit toron.

3. Câble selon la revendication 1, caractérisé en ce que lesdits moyens conducteurs affectés à la téléalimentation comportent des fils conducteurs (5a ou 5b) appartenant avec lesdits fils métalliques de haute résistance mécanique (4, 5b ou 5a) audit toron.

4. Câble selon la revendication 3, caractérisé en ce que ledit toron est à au moins une première couche intérieure de fils tous métalliques à haute résistance mécanique (4) et à une couche périphérique de fils (5a, 5b) les uns métalliques à haute résistance mécanique et les autres conducteurs.

5. Câble selon l'une des revendications 1 à 4, caractérisé en ce que ledit toron de fils (4, 5) entoure directement le tube (1) contenant les fibres (3).

6. Câble selon l'une des revendications 1 à 4, caractérisé en ce qu'il comporte une gaine interne extrudée (10) entre ledit toron et le tube contenant les fibres.

7. Câble selon l'une des revendications 1 à 6, caractérisé en ce qu'il comporte en outre une couche semiconductrice (9) d'interface entre lesdits moyens conducteurs affectés à la téléalimentation (7 ; 5a ou 5b) et ladite gaine externe extrudée (8).

8. Câble selon les revendications 1 à 7, caractérisé en ce qu'il comporte en outre une autre couche semiconductrice remplissant les interstices extérieurs entre les fils périphériques du toron et adhérant sur ces fils périphériques.

9. Câble selon l'une des revendications 7 et 8, caractérisé en ce que la couche semiconductrice est une résine en polyéthylène chargée de particules conductrices.

10. Câble selon l'une des revendications 1 à 9, caractérisé en ce que ledit matériau d'étanchéité (6) est chargé de particules conductrices.

11. Câble selon la revendication 10, caractérisé en ce que ledit matériau d'étanchéité est une résine polyuréthane.

12. Câble selon l'une des revendications 1 à 10, caractérisé en ce que ledit tube (1) est métallique et résistant à la pression ou en plastique pour lequel ledit toron de fils métalliques à haute résistance mécanique forme voûte pour le tube en plastique.

# FIG. 1

# FIG. 2

# FIG. 3

**Office européen des brevets**

## RAPPORT DE RECHERCHE EUROPEENNE

Numéro de la demande

**EP 91 11 1853**

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 278 835   (L.A. JACKSON)<br>* abrégé; figure 1 * * colonne 1, ligne 52 - colonne 2, ligne 16 *<br>– – – | 1,6,12 | G 02 B 6/44 |
| D,A | EP-A-0 371 660   (STAMNITZ)<br>* abrégé; figures 1,2 * * colonne 16, ligne 25 - ligne 35 * * colonne 17, ligne 4 - ligne 10 * * colonne 17, ligne 26 - ligne 37 * * colonne 18, ligne 10 - ligne 25 * * colonne 19, ligne 30 - ligne 45 *<br>– – – | 1,12 | |
| A | EP-A-0 203 249   (FELTEN & GUILLEAUME ENERGIE TECHNIK)<br>* abrégé; figures 3,4 * * page 6, ligne 1 - ligne 5 *<br>– – – | 1 | |
| A | US-A-4 765 711   (D.L. OBST)<br>* abrégé; revendications 1,2; figures 2,3 *<br>– – – – – | 9,10 | |

| DOMAINES TECHNIQUES RECHERCHES (Int. Cl.5) |
|---|
| G 02 B |

Le présent rapport de recherche a été établi pour toutes les revendications

| Lieu de la recherche | Date d'achèvement de la recherche | Examinateur |
|---|---|---|
| La Haye | 12 septembre 91 | VAN DOREMALEN,J.C.H. |